# EUROPEAN PATENT APPLICATION

(11) **EP 1 547 711 A1**
(43) Date of publication of application: **29.06.2005**
(21) Application number: 04030130.1
(22) Date of filing: 20.12.2004
(51) Int. Cl.: B23D 53/12, B23D 55/00, B25F 5/00

(54) **Band saw with bumpers**

(30) Priority: 22.12.2003 US 745112
(71) Applicant: BLACK & DECKER INC., Newark, Delaware 19711 (US)
(72) Inventor: Wright, Stuart J., Timonium Maryland 21093 (US); Mannarino, Frank A., Baltimore Maryland 21212 (US); Achterberg, Nicholas E., New Freedom Pennsylvania 17349 (US)
(74) Representative: Bell, Ian Stephen

(57) **Abstract**

A band saw (10) includes a protective device having at least one shock absorbing/reflecting member (30) for reducing stress concentrations. The at least one shock absorbing member (30) has a configuration adapted to follow an outer contour of at least a portion of the band saw (10). A mechanism (38,40) secures the at least one shock absorbing member (30) to the band saw (10).

## Description

The present invention relates to saws and, more particularly, to band saws including members for absorbing shock.

Band saws include housings generally formed from a metallic material. A preferred metallic material is aluminum which has desirable lightweight characteristics, however, aluminum is somewhat brittle. During use, if the band saw is dropped or mishandled, the aluminum housing has a tendency to bend, chip, break or crack. This is due to the inability of the aluminum housing to absorb shock. When the housing becomes cracked or chipped, this exposes the blade along the band saw wheels; when it is bent it will be too close to the blade and cause rubbing. Accordingly, it is desirable to have a band saw which, if dropped, would absorb the shock and prohibit the housing from bending, cracking or chipping.

The present invention provides the art with a band saw having shock absorbing members, to absorb shock, which, in turn, substantially eliminates bending, cracking, breaking, or chipping of the housing if the band saw is dropped or mishandled. The shock absorbing members are also very elastic so that they transfer the kinetic energy of a drop back into the floor causing the tool to bounce instead of sending all energy into the case housing. The present invention provides a band saw having shock absorbing members such as bumpers to absorb shock if the band saw is dropped. Also, the present invention provides the art with an over molded housing to absorbs shock. Further, the present invention provides the art with a shock absorbing member on the saw wheels to absorb shock if the band saw is dropped.

A protective device for a band saw comprises at least one shock absorbing member to reduce stress concentrations. The at least one shock absorbing member has a configuration adapted to follow an outer contour of at least a portion of a band saw housing. A mechanism is present to secure the at least one shock absorbing member to the band saw. The shock absorbing member is manufactured from a resilient polymeric material. The shock absorbing member may include a reinforcement material. A securing member may be an adhesive or bores through the member with fasteners extending through the bores. Also, the shock absorbing member may include a foam inner core and an outer polymeric material. The surface of the member may be scored or have threads or be textured or the like to reduce stress concentrations.

According to a second embodiment of the present invention, a band saw comprises a housing including a cast portion. A handle is coupled with the housing. A motor is positioned in the housing. An activation member is electrically coupled with the motor and a power source for driving an output. A blade is driven by the motor via the output mechanism. A shock absorbing mechanism is on the housing to reduce stress concentrations applied to the housing upon sudden impact. A protective device for a band saw comprises at least one shock absorbing member to reduce stress concentrations. The at least one shock absorbing member has a configuration adapted to follow an outer contour of at least a portion of a band saw housing. A mechanism is present to secure the at least one shock absorbing member to the band saw. The shock absorbing member is manufactured from a resilient polymeric material. The shock absorbing member may include a reinforcement material. A securing member may be an adhesive or bores through the member with fasteners extending through the bores. Also, the shock absorbing member may include a foam inner core and an outer polymeric material. The surface of the member may be scored or have threads or be textured or the like to reduce stress concentrations.

Also, the shock absorbing mechanism may be an over molded material on the cast portion of the housing. The over mold may include bumpers on the ends.

From the following description taken in conjunction with the appended drawings and claims, other objects and advantages will become apparent to those skilled in the art from the following disclosure.
Figure 1 is perspective view of a band saw in accordance with the present invention.
Figure 2 is a cross section view of Figure 1 along line 2-2 thereof.
Figure 3 is a cross section view of the second embodiment of the bumpers in accordance with the present invention.
Figure 4 is a cross section view of the third embodiment of the present invention.
Figure 5A and B is an enlarged perspective view and a cross section view of an additional embodiment of the bumpers of the present invention.
Figure 6 is a perspective view of a second embodiment of a band saw of the present invention.
Figure 7 is a cross section view of Figure 6 along line 7-7 thereof.
Figure 8 is a perspective view of an additional embodiment of the present invention.

Turning to the Figures, a band saw is illustrated and designated with the reference numeral 10. The band saw 10 includes a housing 12 having a first wheel cover portion 14, a second wheel cover portion 16 and a motor covering portion 18 connecting the two wheel covering portions 14 and 16. A handle 20 is coupled with one of the wheel covering portions 16. The handle 20 includes an activation member 22. Also, a handle 24 is coupled with a front portion of the motor housing 18. A gap 26 is formed between the two wheel covering portions 16 and 14. A blade 28 is secured between the two wheels (not shown) covered by the housing portions 14 and 16. A shock absorbing member 30 is illustrated coupled with both of the wheel housing covering portions 14 and 16.

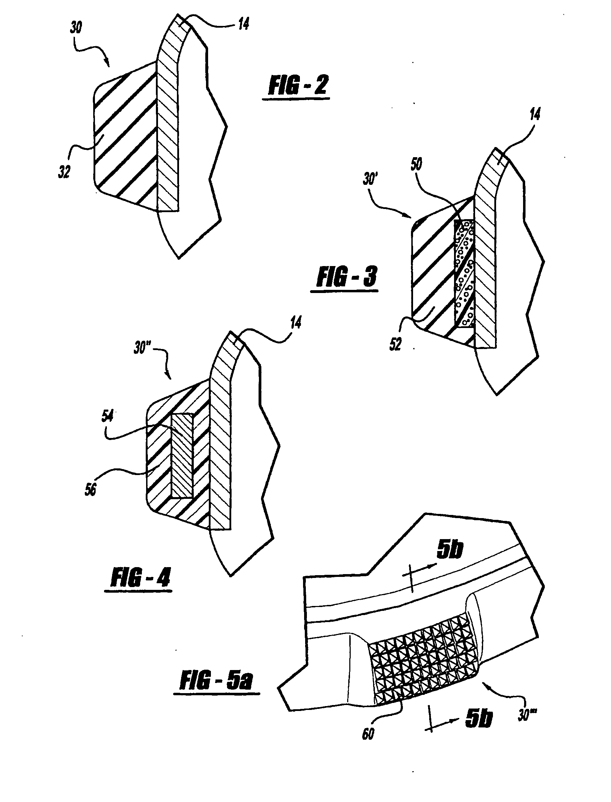

The shock absorbing member 30 generally has an arcuate shape following the outer contour of the housing portions 14 and 16. The shock absorbing member generally has an overall D-shape in cross section as illustrated in Figure 2. A body portion 32 of the shock absorbing member 30 is positioned along the peripheral side edge of the housing portions 14 and 16. The shock absorbing member 30, may be secured to the housing portions 14 and 16 by fasteners 38 passing through bores 40 in the shock absorbing member 30. The fasteners 38 are secured to reciprocating mechanisms, such as threaded holes or non-threaded holes, in the housing portions 14 and 16. Also, the shock absorbing member could be adhered to the housing portions 14 and 16. Further, the housing portions could include an aperture or the like to receive a compressible tang on the shock absorbing member 30 and be press fit into the apertures.

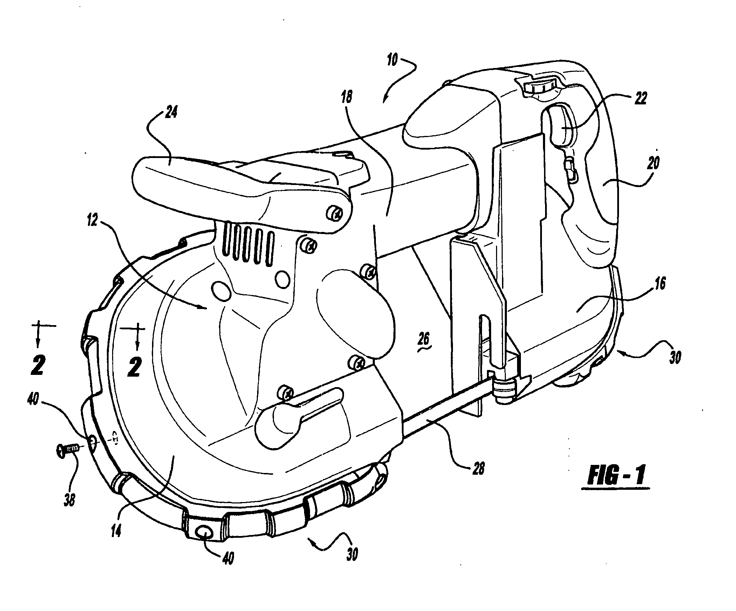

Turning to Figure 3, a second embodiment of the shock absorbing member 30' is illustrated. Here, the shock absorbing member 30' is substantially the same as that in Figures 1 and 2, however, the internal makeup of the shock absorbing member 30' is different. The shock absorbing member 30' includes an inner core 50 formed from a foam material. The foam material 50 is resilient to provide a stress concentration absorber. The outer layer 52 is an elastomeric material harder than the foam core. The outer layer 52 provides a durable and resilient layer. Thus, the two layered shock absorbing members 30' substantially prohibits breakage due to dropping or mishandling of the band saw.

Turning to Figure 4, an additional embodiment of the shock absorbing member is shown. Here, the shock absorbing member 30" is substantially the same as that in Figures 1 and 2, however, the internal structure has been modified.

The shock absorbing member 30" includes a reinforcement inner member 54. The reinforcing member 54 may be a metallic member or a fiber material such as glass. The outer layer 56 may be formed from the same polymeric material as that in Figures 1 or 2. The reinforcement member 54 provides a shock absorbing stress concentration feature in this embodiment.

Turning to Figures 5a and 5b, an additional embodiment is shown. Figures 5a and 5b illustrates a shock absorbing member 30"' substantially the same as that in Figure 1, however, the surface has been modified. In Figures 5a and 5b, the surface is scored or includes threads or texture 60. This surface modification provides spaced raised portions 64 which extend from the surface 62 of the shock absorber 30"'. Thus, as the tool is dropped, the raised portions 64 contacts the ground first. As this occurs, the raised portions 64 deform and spread to absorb the stress concentration due to the shock.

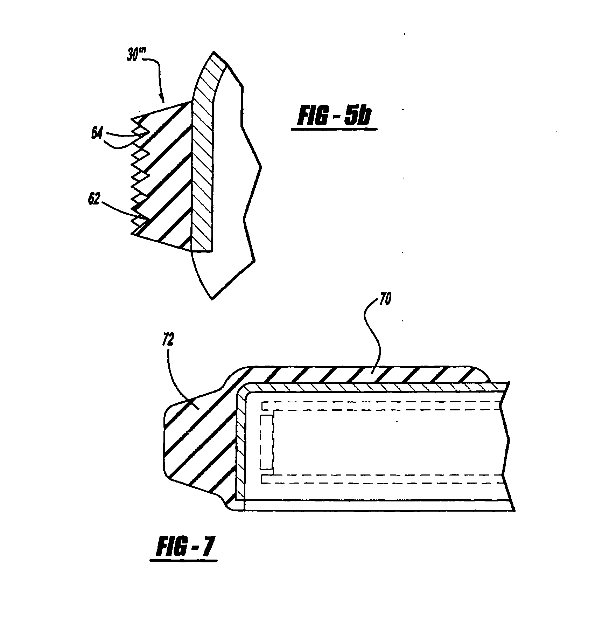

Turning to Figures 6 and 7, an additional embodiment of the band saw is shown. Here, the band saw is substantially the same as that previously described above, however, an over molded covering 70 is placed on top of the housing wheel portions 14 and 16. The over molding covering 70 may be formed from a polymeric material. Also, the over molded material may include unitary bumpers 72 on the peripheral edges of the housing portions 14 and 16, as described above. Thus, the integral bumpers 72, as well as the over molding, protect the housing against stress concentrations.

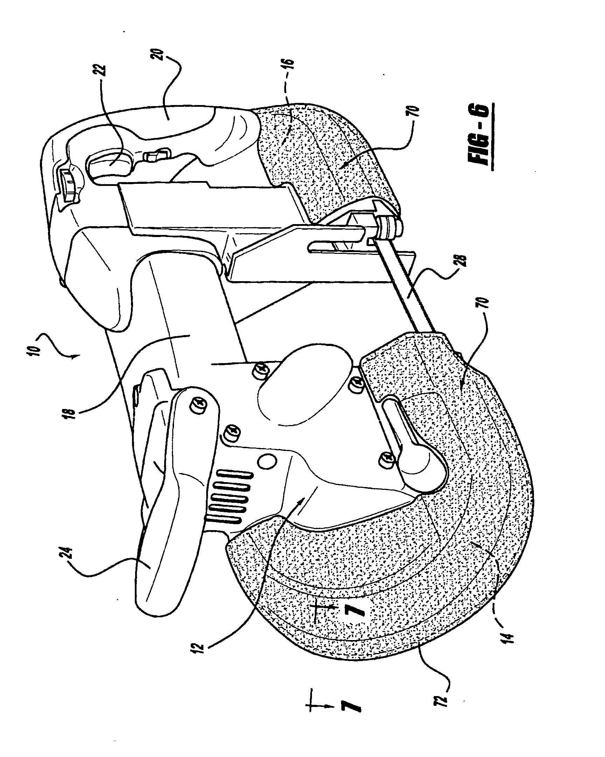

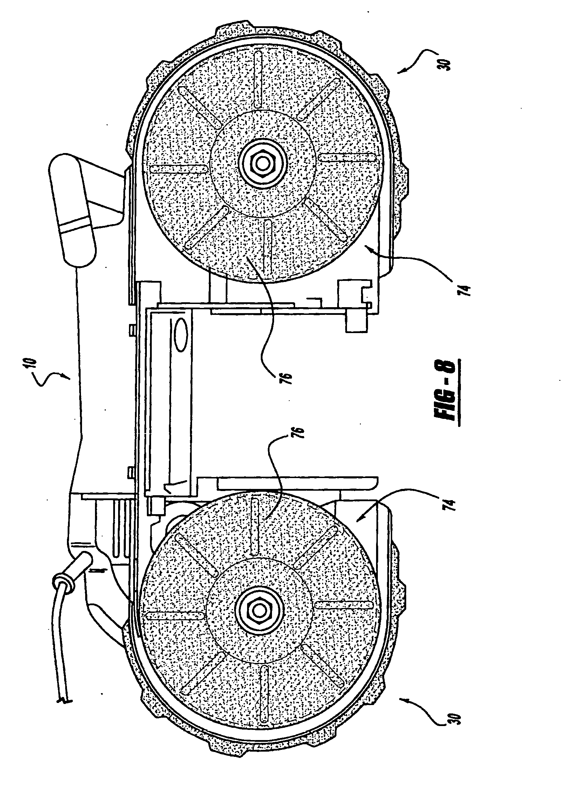

Figure 8 illustrates an additional embodiment of the present invention. Figure 8 is a bottom view of the band saw 10. Here, the band saw wheels 74 include a resilient polymeric covering 76 adhered, glued or the like on their bottom surface. The covering 76 provides a shock absorbing feature if the band saw is dropped on the wheels.

While the above detailed description describes the preferred embodiments of the invention, those skilled in the art will understand that alterations, modifications and variations may exist without deviating from the scope of the preferred embodiment.

## Claims

1. A protective device for a band saw comprising:
at least one shock absorbing member for reducing stress concentrations and reflecting kinetic energy, said at least one shock absorbing member having a configuration adapted for following an outer contour of at least a portion of a band saw; and
a mechanism for securing said at least one shock absorbing member to the band saw.

2. The protective device according to Claim 1, wherein said at least one shock absorbing member is manufactured from a resilient material.

3. The protective device according to Claim 2, wherein said resilient material is a polymeric material.

4. The protective device according to Claim 3, wherein said resilient material includes a reinforcing material.

5. The protective device according to Claim 1, wherein said at least one shock absorbing member has an arcuate shape.

6. The protective device according to Claim 5, wherein said member has a plurality of bores.

7. The protective device according to Claim 6, wherein said securing mechanism being fasteners extending through said bores.

8. A band saw comprising:
a housing, said housing including a casted portion;
a handle coupled with said housing;
a motor positioned in said housing;
an activation member electrically coupled with said motor and a power source;
a blade driven by said motor via an output mechanism; and
a shock absorbing mechanism on said housing for reducing stress concentrations applied to said housing upon sudden impacts.

9. A band saw according to Claim 8, wherein said shock absorbing member is manufactured from a resilient material.

10. A band saw according to Claim 9, wherein said resilient material is a polymeric material.

11. A band saw according to Claim 8, wherein said shock absorbing member includes a reinforcing material.

12. A band saw according to Claim 8, wherein said shock absorbing member has an arcuate shape.

13. A band saw according to Claim 8, wherein said shock absorbing member has a plurality of bores.

14. A band saw according to Claim 13, further comprising a securing mechanism being fasteners extending through said bores.

15. The band saw according to Claim 8, wherein said shock absorbing mechanism being an over molded material on said casted portion of said housing.

16. The band saw according to Claim 15, wherein the over mold includes unitarily bumpers on the ends of the housing.

17. The band saw according to Claim 15, wherein bumpers are secured over said over molding at ends of said housing.

18. The band saw according to Claim 1, wherein said shock absorbing member being an over molded covering.

19. The band saw according to Claim 18, wherein said covering includes at least one bumper.

20. A band saw comprising:
a housing, said housing including a casted portion;
a handle coupled with said housing;
a motor positioned in said housing;
an activation member electrically coupled with said motor and a power source;
a blade driven by said motor via an output mechanism; and
a shock absorbing mechanism on said output mechanism for reducing stress concentrations applied to said output mechanism upon sudden impact.
